# EUROPÄISCHE PATENTSCHRIFT

(11) **EP 2 655 111 B1**
(45) Veröffentlichungstag und Bekanntmachung des Hinweises auf die Patenterteilung: **11.05.2016**
(21) Anmeldenummer: 11779415.6
(22) Anmeldetag: 08.11.2011
(51) Int. Cl.: B60K 6/48, B60K 6/365, B60K 6/387, F16H 3/72, F16H 3/12, B60W 10/10, B60W 20/00, F16H 3/00

(54) **VORRICHTUNG FÜR EINEN ANTRIEBSSTRANG EINES HYBRIDFAHRZEUGS, ANTRIEBSSTRANG UND VERFAHREN ZUM BETREIBEN DERSELBEN**
DEVICE FOR A DRIVETRAIN OF A HYBRID VEHICLE, DRIVETRAIN, AND METHOD FOR OPERATING SAME
DISPOSITIF POUR UNE CHAÎNE CINÉMATIQUE D'UN VÉHICULE HYBRIDE, CHAÎNE CINÉMATIQUE ET PROCÉDÉ PERMETTANT DE FAIRE FONCTIONNER CETTE CHAÎNE

(30) Priorität: 20.12.2010 DE 102010063582
(43) Veröffentlichungstag der Anmeldung: 30.10.2013
(73) Patentinhaber: ZF Friedrichshafen AG, 88038 Friedrichshafen (DE)
(72) Erfinder: KALTENBACH, Johannes, 88048 Friedrichshafen (DE); BORNTRÄGER, Kai, 88085 Langenargen (DE)
(86) Internationale Anmeldenummer: PCT/EP2011/069595
(87) Internationale Veröffentlichungsnummer: WO 2012/084330

(56) Entgegenhaltungen:
- EP-A2- 0 845 618
- DE-A1-102007 042 949
- US-A1- 2010 173 746
- US-A1- 2010 282 531

## Beschreibung

Die Erfindung betrifft eine Vorrichtung für einen Antriebsstrang eines Hybridfahrzeugs nach dem Oberbegriff des Anspruchs 1, einen Antriebsstrang eines Hybridfahrzeugs mit einer solchen Vorrichtung und Verfahren zum Betreiben derselben.

Aus der DE 10 2006 059 591 A1 ist ein Antriebsstrang eines Hybridfahrzeugs bekannt, dessen Antriebsaggregat als Hybridantrieb ausgebildet und von einem Verbrennungsmotor und einer elektrischen Maschine gebildet ist. Neben dem Hybridantrieb umfasst der aus diesem Stand der Technik bekannte Antriebsstrang ein Getriebe mit zwei parallel geschalteten Teilgetrieben, wobei das Getriebe zwei Getriebeeingangswellen und eine Getriebeausgangswelle umfasst. Ferner umfasst der aus diesem Stand der Technik bekannte Antriebsstrang eine Vorrichtung, die der Anbindung der elektrischen Maschine des Hybridantriebs an das Getriebe dient, wobei diese Vorrichtung ein Planetengetriebe umfasst, welches als Elemente einen Steg, ein Sonnenrad und ein Hohlrad aufweist. Die elektrische Maschine des Hybridantriebs ist an ein Element des Planetengetriebes, nämlich an das Sonnenrad, fest angebunden, wobei ein zweites Element des Planetengetriebes, nämlich ein Steg desselben, an eine erste Getriebeeingangswelle eines ersten Teilgetriebes des Getriebes fest angebunden ist. Ein drittes Element des Planetengetriebes, nämlich das Hohlrad desselben, ist an eine zweite Getriebeeingangswelle eines zweiten Teilgetriebes des Getriebes fest angebunden, wobei an diese zweite Getriebeeingangswelle des zweiten Teilgetriebes ferner der Verbrennungsmotor des Hybridantriebs über eine Trennkupplung ankoppelbar ist. Mit einem solchen Antriebsstrang kann ein definierter Funktionsumfang für ein Hybridfahrzeug bereitgestellt werden.

Eine Vorrichtung nach dem Oberbegriff des Anspruchs 1 ist aus der DE 10 2007 042 949 A1 bekannt.

Es besteht Bedarf an einem Antriebsstrang eines Hybridfahrzeugs sowie einer Vorrichtung für einen solchen Antriebsstrang eines Hybridfahrzeugs, mithilfe derer der Funktionsumfang eines Hybridfahrzeugs erweitert werden kann.

Hiervon ausgehend liegt der vorliegenden Erfindung die Aufgabe zu Grunde, eine neuartige Vorrichtung für einen Antriebsstrang eines Hybridfahrzeugs sowie einen neuartigen Antriebstrang und Verfahren zum Betreiben derselben zu schaffen.

Diese Aufgabe wird durch eine Vorrichtung gemäß Anspruch 1 gelöst. Die erfindungsgemäße Vorrichtung umfasst einerseits ein erstes Schaltelement, über welches ein drittes Element dieser Elemente des Planetengetriebes in einer ersten Schaltstellung des ersten Schaltelements an eine Getriebeeingangswelle eines zweiten Teilgetriebes des Getriebes, an welche ferner ein Verbrennungsmotor des Hybridantriebs koppelbar ist, und in einer zweiten Schaltstellung des ersten Schaltelements gehäuseseitig bzw. statorseitig anbindbar ist, und andererseits ein zweites Schaltelement, über welches bei geschlossenem zweiten Schaltelement die Getriebeeingangswellen beider Teilgetriebe aneinander koppelbar und bei geöffnetem zweiten Schaltelement die Getriebeeingangswellen beider Teilgetriebe voneinander trennbar sind.

Erfindungsgemäß wird vorgeschlagen, dass das dritte Element des Planetengetriebes über das erste Schaltelement schaltbar ist, wobei in der ersten Schaltstellung des ersten Schaltelements das dritte Element des Planetengetriebes an die zweite Getriebeeingangswelle gekoppelt ist, und wobei in der zweiten Schaltstellung des ersten Schaltelements das dritte Element des Planetengetriebes gehäuseseitig angebunden ist. Über das zweite Schaltelement, welches als Überbrückungsschaltelement dient, können im geschlossenen Zustand des zweiten Schaltelements die Getriebeeingangswellen der Teilgetriebe aneinander gekoppelt werden, sodass zwischen denselben zwingende Drehzahlgleichheit besteht. Im geöffneten Zustand des zweiten Schaltelements sind die die Getriebeeingangswellen der Teilgetriebe voneinander getrennt, sodass zwischen denselben keine zwingende Drehzahlgleichheit besteht.

Mit der erfindungsgemäßen Vorrichtung können an einem Antriebsstrang eines Hybridfahrzeugs eine Vielzahl von Funktionen bzw. Betriebszuständen abgedeckt bzw. realisiert werden.

Nach einer vorteilhaften Weiterbildung ist in einer dritten, geöffneten Schaltstellung des ersten Schaltelements das dritte Element des Planetengetriebes frei drehbar.

Dann, wenn das erste Schaltelement zusätzlich die dritte, geöffnete Schaltstellung umfasst, in welcher das dritte Element des Planetengetriebes weder an die Getriebeeingangswelle des zweiten Teilgetriebes noch gehäusefest bzw. statorseitig angekoppelt ist, kann der Funktionsumfang eines Hybridfahrzeugs nochmals erweitert werden.

Der erfindungsgemäße Antriebsstrang ist in Anspruch 5 definiert. Erfindungsgemäße Verfahren zum Betreiben einer erfindungsgemäßen Vorrichtung bzw. eines erfindungsgemäßen Antriebsstrangs sind in den Patentansprüchen 10, 11, 12, 13, 14 und 15 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines erfindungsgemäßen Antriebsstrangs mit einer erfindungsgemäßen Vorrichtung nach einem ersten Ausführungsbeispiel der Erfindung;
- Fig. 2: ein Schema eines erfindungsgemäßen Antriebsstrangs mit einer erfindungsgemäßen Vorrichtung nach einem zweiten Ausführungsbeispiel der Erfindung;
- Fig. 3: ein Schema eines erfindungsgemäßen Antriebsstrangs mit einer erfindungsgemäßen Vorrichtung nach einem dritten Ausführungsbeispiel der Erfindung;
- Fig. 4: ein Schema eines erfindungsgemäßen Antriebsstrangs mit einer erfindungsgemäßen Vorrichtung nach einem vierten Ausführungsbeispiel der Erfindung;
- Fig. 5: ein Schema eines erfindungsgemäßen Antriebsstrangs mit einer erfindungsgemäßen Vorrichtung nach einem fünften Ausführungsbeispiel der Erfindung;
- Fig. 6: ein Schema eines erfindungsgemäßen Antriebsstrangs mit einer erfindungsgemäßen Vorrichtung nach einem sechsten Ausführungsbeispiel der Erfindung; und
- Fig. 7: ein Schema eines erfindungsgemäßen Antriebsstrangs mit einer erfindungsgemäßen Vorrichtung nach einem siebten Ausführungsbeispiel der Erfindung.

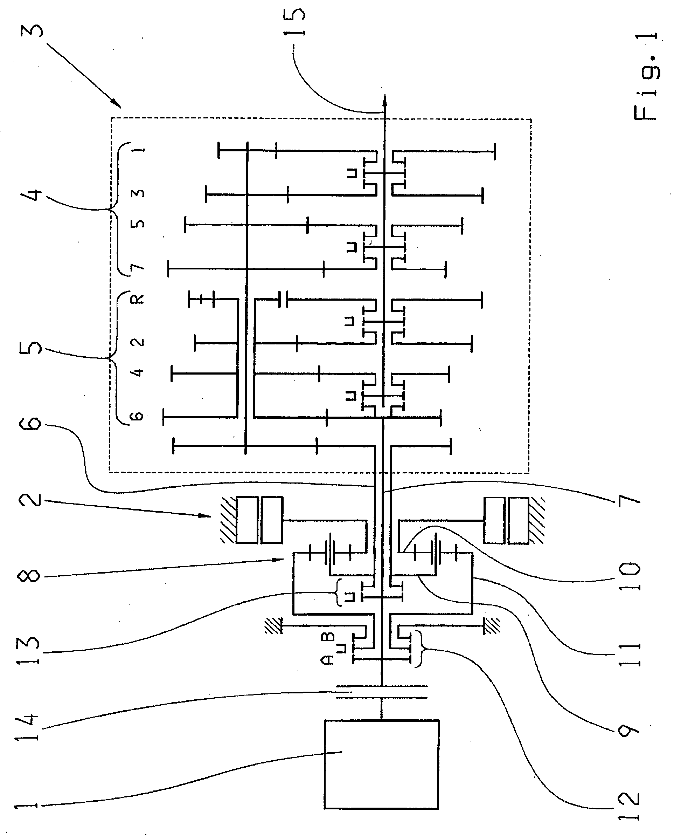

Fig. 1 zeigt ein bevorzugtes Ausführungsbeispiel eines Antriebsstrangs eines Hybridfahrzeugs, wobei der Antriebsstrang der Fig. 1 einen Hybridantrieb umfasst, der von einem Verbrennungsmotor 1 und einer elektrischen Maschine 2 bereitgestellt wird. Der Antriebsstrang der Fig. 1 umfasst weiterhin ein Getriebe 3 mit zwei parallel zueinander geschalteten Teilgetrieben 4 und 5, wobei im Ausführungsbeispiel der Fig. 1 das erste Teilgetriebe 4 die Vorwärtsgänge "1", "3", "5" und "7" bereitstellt, und wobei das zweite Teilgetriebe 5 die Vorwärtsgänge "2", "4" und "6" sowie den Rückwärtsgang "R" bereitstellt. Bei dem in Fig. 1 exemplarisch gezeigten Getriebe 3 mit den beiden Teilgetrieben 4 und 5 handelt es sich um ein 7-Gangdoppelkupplungsgetriebe, dieses Getriebe ist jedoch für die Erfindung nicht zwingend erforderlich. Es können auch andere Getriebe mit zwei parallel geschalteten Teilgetrieben Verwendung finden. Das Getriebe 3 umfasst zwei Getriebeeingangswellen 6 und 7, nämlich eine mit dem ersten Teilgetriebe 4 zusammenwirkende, erste Getriebeeingangswelle 6, eine mit dem zweiten Teilgetriebe 5 zusammenwirkende, zweite Getriebeeingangswelle 7. Die Getriebeeingangswelle 6 ist im gezeigten Ausführungsbeispiel als Hohlwelle ausgeführt, in welcher die Getriebeeingangswelle 7 verläuft. Ferner verfügt das Getriebe 3 über eine einzige Getriebeausgangswelle 15.

Der Antriebsstrang der Fig. 1 umfasst eine Vorrichtung zur Anbindung der elektrischen Maschine 2 an das Getriebe 3, wobei die Vorrichtung zumindest ein Planetengetriebe 8 mit einem Steg 9, einem Sonnenrad 10 und einer Hohlrad 11 aufweist. Ein erstes Element dieser drei Elemente 9, 10 und 11 des Planetengetriebes 8, im gezeigten Ausführungsbeispiel der Fig. 1 der Steg 9, dient der festen Anbindung der Getriebeeingangswelle 6 des ersten Teilgetriebes 4 des Getriebes 3. Beim Antriebsstrang der Fig. 1 ist demnach die Getriebeeingangswelle 6 des ersten Teilgetriebes 4 fest an den Steg 9 des Planetengetriebes 8 gekoppelt.

Ein zweites Element dieser Elemente 9, 10 und 11 des Planetengetriebes 8 dient der festen Anbindung der elektrischen Maschine 2 des Hybridantriebs, wobei es sich in Fig. 1 bei diesem zweiten Element des Planetengetriebes 8 um das Sonnenrad 10 handelt. In Fig. 1 ist demnach die elektrische Maschine 2 fest mit dem Sonnenrad 10 gekoppelt.

Zusätzlich zum Planetengetriebe 8 umfasst die Vorrichtung des Antriebsstrangs der Fig. 1 ein erstes Schaltelement 12 mit zumindest zwei Schaltstellungen A und B, wobei in der ersten Schaltstellung A des ersten Schaltelements 12 ein drittes Element der Elemente 9, 10 und 11 des Planetengetriebes 8, nämlich in Fig. 1 das Hohlrad 11, an die Getriebeeingangswelle 7 des zweiten Teilgetriebes 5 des Getriebes 3 gekoppelt ist, und wobei in einer zweiten Schaltstellung B des ersten Schaltelements 12 das dritte Element des Planetengetriebe 8, nämlich in Fig. 1 das Hohlrad 11 desselben gehäusefest bzw. statorseitig angebunden ist.

Nach einer vorteilhaften Weiterbildung der Erfindung umfasst das erste Schaltelement 12 neben den beiden geschlossenen Schaltstellungen A und B ferner eine dritte, geöffnete Schaltstellung, in welcher das dritte Element des Planetengetriebes 8, nämlich in Fig. 1 das Hohlrad 11, sowohl von der Getriebeeingangswelle 7 des zweiten Teilgetriebes 5 als auch gehäuseseitig bzw. statorseitig abgekoppelt ist, sodass das dritte Element des Planetengetriebes 8 dann frei drehen kann.

Zusätzlich umfasst die Vorrichtung des Antriebsstrangs der Fig. 1 ein zweites Schaltelement 13, wobei das zweite Schaltelement 13 eine erste, geschlossene Schaltstellung und eine zweite, geöffnete Schaltstellung aufweist. Bei geschlossenem, zweitem Schaltelement 13 sind die Getriebeeingangswellen 6 und 7 beider Teilgetriebe 4 und 5 aneinander gekoppelt, sodass zwischen denselben dann zwingende Drehzahlgleichheit besteht. Bei geschlossenem, zweitem Schaltelement 13 ist das erste Element des Planetengetriebes 8, in Fig. 1 der Steg 9 desselben, sowohl an die Getriebeeingangswelle 6 des ersten Teilgetriebes 4 als auch an die Getriebeeingangswelle 7 des zweiten Teilgetriebes 5 des Getriebes 3 angebunden. Bei geöffnetem, zweiten Schaltelement 13 sind dieGetriebeeingangswelle 6 und 7 der Teilgetriebe 4 und 5 voneinander getrennt, sodass zwischen denselben keine zwingende Drehzahlgleichheit besteht.

In der geöffneten Position des zweiten Schaltelements 13 ist demnach das erste Element des Planetengetriebes 8, nämlich in Fig. 1 der Steg 9, ausschließlich an die Getriebeeingangswelle 6 des ersten Teilgetriebes 4 gekoppelt.

Ferner umfasst der Antriebsstrang der Fig. 1 eine Trennkupplung 14, wobei es sich bei der Trennkupplung 14 um eine optionale Baugruppe handelt. Über die Trennkupplung 14 ist der Verbrennungsmotor 1 an die Getriebeeingangswelle 7 des zweiten Teilgetriebes 5 des Getriebes 3 ankoppelbar sowie von derselben abkoppelbar.

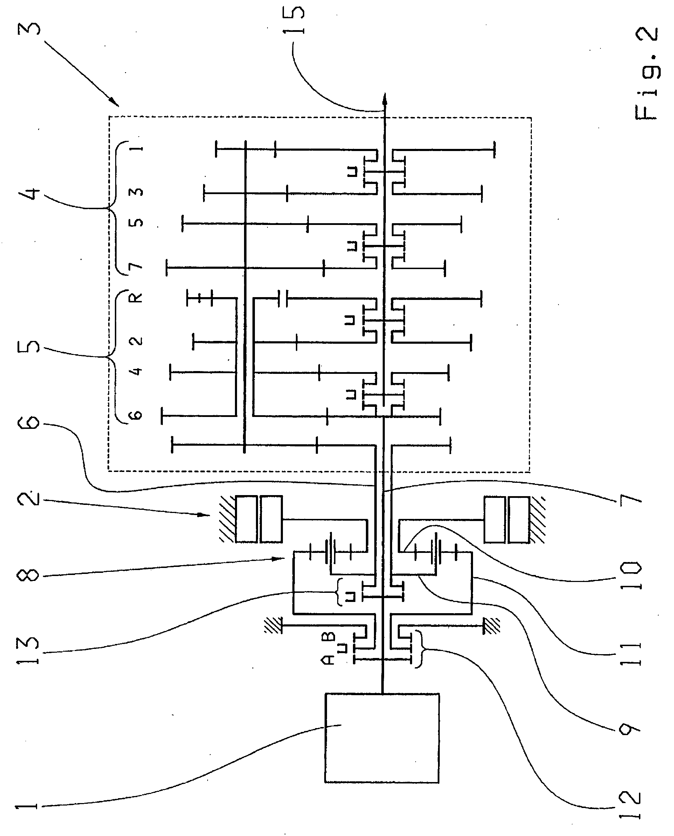

Fig. 2 zeigt eine Ausführungsvariante der Erfindung, in welcher die Trennkupplung 14 nicht vorhanden ist, die hinsichtlich aller übrigen Details jedoch mit dem Ausführungsbeispiel der Fig. 1 übereinstimmt. In Fig. 2 ist demnach der Verbrennungsmotor 1 kupplungslos an die Getriebeeingangswelle 7 des zweiten Teilgetriebes 5 gekoppelt.

Dann, wenn die Trennkupplung 14 vorhanden ist, kann die elektrische Maschine 2 bei geöffneter Trennkupplung 14 zum rein elektrischen Fahren auch die Gänge des zweiten Teilgetriebes 5 nutzen.

Ist hingegen die Trennkupplung 14, wie in Fig. 2 gezeigt, nicht vorhanden, so kann die elektrische Maschine 2 zum rein elektrischen Fahren bei abgeschaltetem Verbrennungsmotor 1 ausschließlich die Gänge des ersten Teilgetriebes 4 nutzen.

Dann, wenn das erste Schaltelement 12 die erste Schaltstellung A einnimmt, wirkt das Planetengetriebe 8 als Überlagerungsgetriebe.

Bei geschlossener Schaltstellung A des ersten Schaltelements 12 kann zum Beispiel bei geschlossener Trennkupplung 14, bei einem im ersten Teilgetriebe 4 eingelegten Gang und bei zweitem Teilgetriebe 5 in Neutral elektrodynamisch angefahren werden, also mit generatorischem Betrieb der elektrischen Maschine 2, um so einen elektrischen Energiespeicher stärker aufzuladen. In diesem Fall dient das zweite Schaltelement 13 als Überbrückungsschaltelement nach Beendigung des Anfahrvorgangs, sodass das Planetengetriebe 8 in einen Blockumlauf gebracht werden kann.

Ferner können dann, wenn das erste Schaltelement 12 die erste Schaltstellung A einnimmt, am Antriebsstrang Lastschaltungen mit Drehzahlüberlagerung von Verbrennungsmotor 1 und elektrischer Maschine 2 ausgeführt werden. So kann dann die elektrische Maschine 2 am Planetengetriebe 8 ein Moment des Verbrennungsmotors 1 drehzahlvariabel abstützen. Der Verbrennungsmotor 1 und die elektrische Maschine 2 wirken dann gemeinsam auf die Getriebeausgangswelle 15, die elektrische Maschine 2 kann motorisch oder generatorisch betrieben werden.

Dann, wenn das erste Schaltelement 12 die zweite Schaltstellung B einnimmt, wirkt das Planetengetriebe 8 als Konstantübersetzung.

Bei geschlossener Schaltstellung B des ersten Schaltelements 12 kann dann über eine motorisch betriebene elektrische Maschine 2 rein elektrisch angefahren werden, nämlich unter stärkerer Entladung eines elektrischen Energiespeichers. In diesem Fall kann über das als Konstantübersetzung wirkende Planetengetriebe 8 ein erhöhtes Anfahrmoment bereitgestellt werden.

Weiterhin kann in geschlossener Schaltstellung B des ersten Schaltelements 12 eine Lastschaltung ausgeführt werden, bei welcher die elektrische Maschine 2 während der Schaltung durch Entladen eines elektrischen Energiespeichers Moment am Abtrieb bereitstellt. Der Verbrennungsmotor 1 trägt in diesem Fall nicht zum Abtriebmoment an der Getriebeausgangswelle 15 bei.

Eine Schaltstrategie für das erste Schaltelement 12 sieht vor, dass dann, wenn das Hybridfahrzeug sich im Stillstand befindet oder bei kleiner Fahrgeschwindigkeit fährt, dann die Schaltposition B am ersten Schaltelement 12 geschlossen bzw. eingenommen wird, wenn der Ladezustand eines mit der elektrischen Maschine 2 zusammenwirkenden elektrischen Energiespeichers größer als ein definierter Grenzwert ist. Dieser definierte Grenzwert für den Ladezustand des elektrischen Energiespeichers wird vorzugsweise so gewählt, dass eine rein elektrische Fahrt aus dem Stillstand heraus bei motorischem Betrieb der elektrischen Maschine 2 und bei einem ersten Schaltelement 12 in der zweiten Schaltstellung B möglich ist.

Sollte der Ladezustand des elektrischen Energiespeichers kleiner als dieser Grenzwert sein, so wird am ersten Schaltelement 12 die Schaltstellung A geschlossen bzw. eingenommen, um auch bei geringem Ladezustand des elektrischen Energiespeichers verschleißfrei, elektrodynamisch im generatorischen Betrieb der elektrischen Maschine 2 anfahren zu können.

Am ersten Schaltelement 12 wird die Schaltposition B auch dann gewählt, wenn bei abgeschaltetem Verbrennungsmotor 1 rein elektrisch gefahren werden soll. In diesem Fall wird die Trennkupplung 14 vorzugsweise geöffnet, die elektrische Maschine 2 kann über das als Konstantübersetzung dienende Planetengetriebe 8 ein relativ hohes Anfahrmoment bereitstellen, die elektrische Maschine 2 erreicht beim Beschleunigen des Hybridfahrzeugs früher eine maximal mögliche Leistung.

Ferner wird die Schaltposition B am ersten Schaltelement 12 vorzugsweise beim Bremsen über die elektrische Maschine 2, also beim Rekuperieren, gewählt, damit der Verbrennungsmotor 1 abgekoppelt und abgeschaltet werden kann, nämlich durch Öffnen der Trennkupplung 14 und Ausschalten des Verbrennungsmotors 1.

Die Schaltposition A für das erste Schaltelement 12 wird insbesondere bei der Ausführung von Lastschaltungen des Antriebsstrangs gewählt, nämlich insbesondere dann, wenn als elektrische Maschine 2 eine weniger leistungsfähige, elektrische Maschine verbaut ist. Dann, wenn die Schaltposition A am ersten Schaltelement 12 geschlossen ist, kann während der Ausführung einer Schaltung mehr Antriebsmoment an der Getriebeausgangswelle 15 bereitgestellt werden, weil der Verbrennungsmotor 1 dauerhaft Leistung über das Planetengetriebe 8 aufbringen kann. In der Schaltstellung B hingegen muss die elektrische Maschine 2 die Zugkraft der Getriebeausgangswelle 15 alleine aufrechterhalten. Ferner verfügt der Verbrennungsmotor 1 dann, wenn am ersten Schaltelement 12 die Schaltposition A gewählt ist, bei der Ausführung von Lastschaltungen über das Planetengetriebe 8 über einen gleichmäßigen Momentverlauf, wodurch Emissionen reduziert werden können. Dann, wenn am ersten Schaltelement 12 die Schaltstellung B eingenommen ist, erfolgt bei der Ausführung von Lastschaltungen am Verbrennungsmotor 1 ein Lastabbau und nach Ausführung der Lastschaltung ein Lastaufbau, wodurch höhere Emissionen verursacht werden können.

Dann, wenn das erste Schaltelement 12 neben der Schaltstellung A und der Schaltstellung B auch eine dritte Schaltstellung aufweist, in welcher das dritte Element des Planetengetriebes 8, nämlich in Fig. 1 das Hohlrad 12, sowohl von der Getriebeeingangswelle 7 als auch gehäuseseitig abgekoppelt ist, wird diese dritte Schaltstellung am ersten Schaltelement 12 insbesondere bei einer Konstantfahrt des Hybridfahrzeugs gewählt, also dann, wenn wenig generatorisch erzeugte Energie benötigt wird, da in dieser Schaltstellung die elektrische Maschine 2 zur Vermeidung von Nulllastverlusten abgekoppelt und still gesetzt werden kann. Ferner kann diese dritte Schaltstellung des ersten Schaltelements 12 im Fehlerfall der elektrischen Maschine gewählt werden, um auch im Fehlerfall derselben einen Fahrbetrieb ausschließlich über den Verbrennungsmotor 1 zu ermöglichen.

Weitere Besonderheiten des Antriebsstrangs der Fig. 1 bestehen darin, dass das erste Teilgetriebe 4 stets über eine drehzahlgeregelte elektrische Maschine 2 synchronisiert werden kann, entweder unmittelbar bzw. direkt in der Schaltstellung B des ersten Schaltelements 12 oder mittelbar bzw. indirekt über das Planetengetriebe 8 in der Schaltstellung A des ersten Schaltelements 12.

Das zweite Teilgetriebe 5 wird entweder bei geöffneter Trennkupplung 14 und geöffnetem, zweiten Schaltelement 13 durch Synchronisierungen im Getriebe 3 synchronisiert oder durch eine Drehzahlregelung des Verbrennungsmotors 1 mit zumindest teilweisem Schließen der Trennkupplung 14 oder in der Schaltposition A des ersten Schaltelements 12 durch eine Drehzahlregelung der elektrischen Maschine 2 mittelbar bzw. indirekt über das Planetengetriebe 8.

Im in Fig. 1 gezeigten Ausführungsbeispiel ist das erste Schaltelement 12 als formschlüssiges Schaltelement ausgeführt, ebenso wie das zweite Schaltelement 13 als formschlüssiges Schaltelement ausgeführt ist. Die Trennkupplung 14 ist in Fig. 1 als reibschlüssige Trennkupplung ausgeführt.

An dieser Stelle sei darauf hingewiesen, dass die Trennkupplung 14, bei welcher es sich, wie bereits erwähnt, um eine optionale Baugruppe handelt, auch als formschlüssige Klauenkupplung ausgeführt sein kann. In diesem Fall ist ein elektrodynamisches Anfahren bei geschlossener Schaltstellung B des ersten Schaltelements 12 trotzdem möglich, da in diesem Fall die Trennkupplung 14 ohnehin geschlossen ist.

Ein rein verbrennungsmotorisches Anfahren ohne elektrische Maschine 2 ist jedoch nur dann möglich, wenn die Trennkupplung 14 als reibschlüssige Kupplung ausgeführt ist.

Zur Reduzierung eines benötigten Bauraums sowie zur Kostenreduzierung kann die Trennkupplung 14 auch als unsynchronisierte Klauenkupplung ausgeführt sein. In diesem Fall ist zum Beispiel ein rein elektrisches Fahren bei geschlossener Schaltstellung B des ersten Schaltelements 12, ein elektrodynamisches Anfahren bei geschlossener Schaltstellung A des ersten Schaltelements 12 sowie ein hybridisches Anfahren möglich. Das Anfahren ausschließlich über den Verbrennungsmotor 1 ist hingegen in diesem Fall nicht möglich.

Bevor nachfolgend auf bevorzugte Verfahren zum Betreiben des Antriebsstrangs bzw. einer Vorrichtung eines solchen Antriebsstrangs beschrieben werden, soll vorab unter Bezugnahme auf Fig. 2 bis 7 auf Varianten des Ausführungsbeispiels der Fig. 1 eingegangen werden.

Wie bereits ausgeführt, zeigt Fig. 2 eine Variante der Fig. 1, bei welcher keine Trennkupplung 14 vorhanden ist, in welcher also der Verbrennungsmotor 1 kupplungslos an die Eingangswelle 7 des zweiten Teilgetriebes 5 gekoppelt ist. In diesem Fall kann die elektrische Maschine 1 ausschließlich die Gänge des ersten Teilgetriebes 4 zum rein elektrischen Fahren bei abgeschaltetem Verbrennungsmotor 1 nutzen. In diesem Fall wird der Verbrennungsmotor 1 über ein geöffnetes, zweites Schaltelement 13 und durch ein zweites Teilgetriebe 5 in Neutralposition von der Getriebeausgangswelle 15 abgekoppelt. In der Variante der Fig. 2 kann das zweite Teilgetriebe 5 entweder durch eine Drehzahlregelung am Verbrennungsmotor 1 oder durch elektrodynamische Lastschaltungen über das in der Schaltstellung A als Überlagerungsgetriebe wirkende Planetengetriebe 8 synchronisiert werden.

Im Ausführungsbeispiel der Fig. 2 ist ein rein verbrennungsmotorisches Anfahren über den Verbrennungsmotor 1 ohne mitdrehende elektrische Maschine 2 nicht möglich. Auch kann gegebenenfalls unter Umständen das Öffnen des Antriebsstrangs unter Last zum Beispiel bei einer Vollbremsung nicht realisiert werden.

In der Variante der Fig. 2 kann eine Zusatzstartereinrichtung vorhanden sein, weil der Verbrennungsmotor 1 durch die elektrische Maschine 2 gegebenenfalls nicht angeschleppt werden kann.

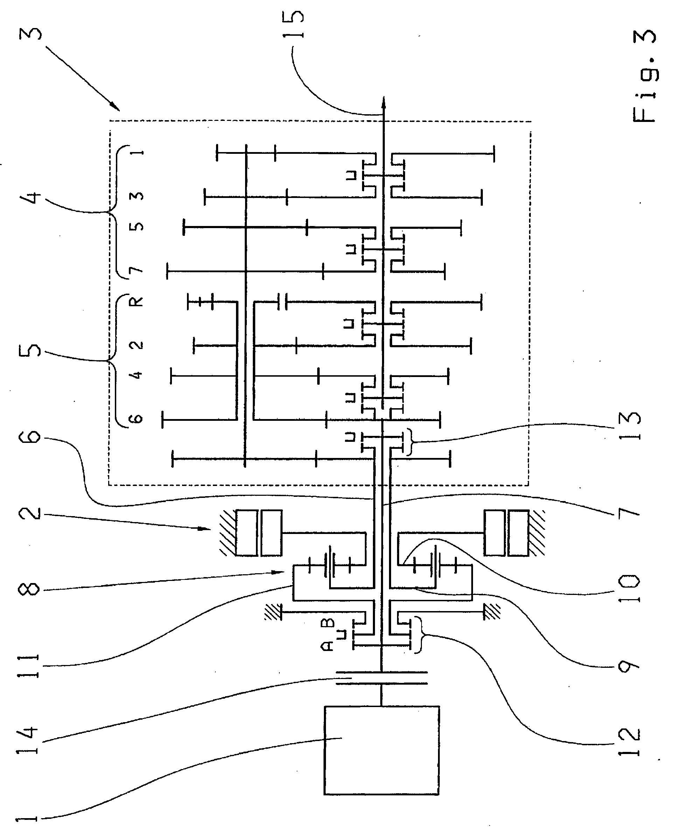

Fig. 3 zeigt eine Variante der Erfindung, in welcher zum Unterschied zum Ausführungsbeispiel der Fig. 1 das zweite Schaltelement 13 in einen Radsatz des Getriebes 3 integriert ist. Diese Integration des zweiten Schaltelements 13 in einen Radsatz des Getriebes 3 ist von Vorteil, da in diesem Fall das zweite Schaltelement 13 von außen ohne Drehdurchführung zugänglich ist. In den Varianten der Fig. 1 und 2 ist zur Betätigung des zweiten Schaltelements 13 eine Drehdurchführung erforderlich.

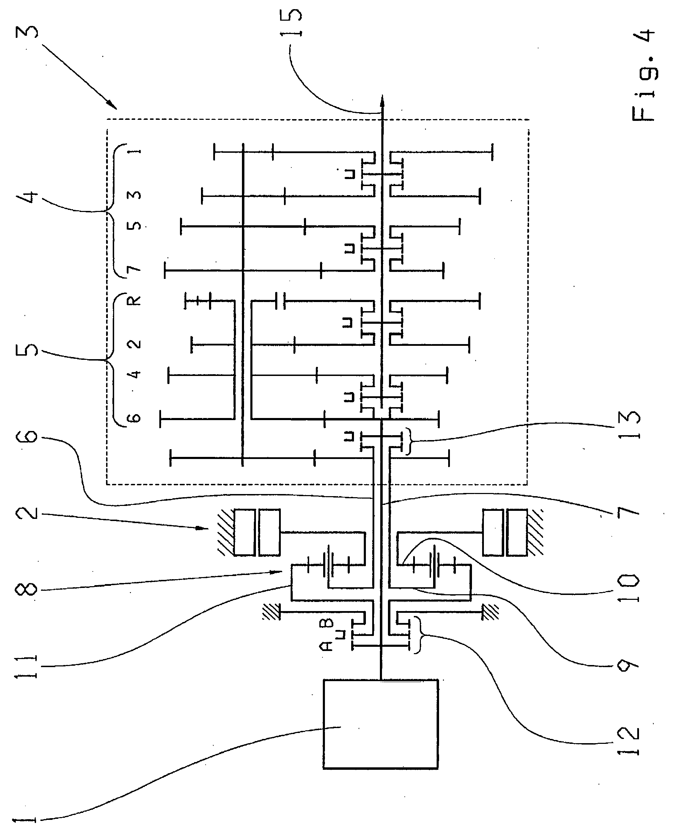

In der Variante der Fig. 4, die im Wesentlichen der Variante der Fig. 2 entspricht, wird in Übereinstimmung zur Variante der Fig. 3 das zweite Schaltelement 13 ebenfalls in einen Radsatz des Getriebes 3 integriert. Die Variante der Fig. 4 entspricht demnach der Variante der Fig. 3 ohne Trennkupplung 14.

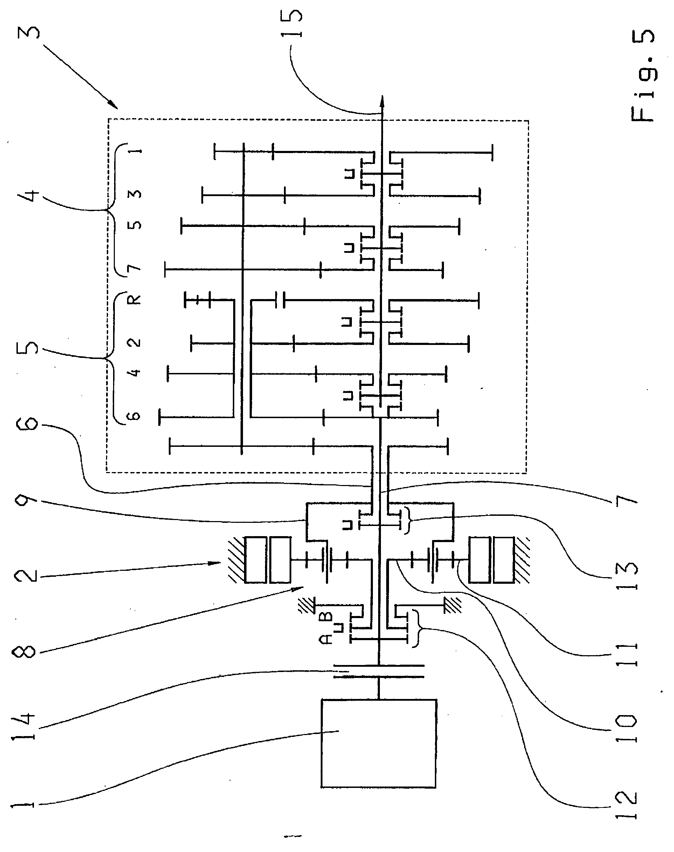

Eine weitere Variante der Erfindung ist in Fig. 5 gezeigt, wobei in der Variante der Fig. 5 die Anbindung des Planetengetriebes 8 geändert ist.

So handelt es sich in der Variante der Fig. 5 beim ersten Element des Planetengetriebes 8, an welchem die Getriebeeingangswelle 6 des ersten Teilgetriebes 4 fest angebunden ist, um den Steg 9 des Planetengetriebes 8. Beim zweiten Element des Planetengetriebes, an welchem die elektrische Maschine 2 fest angebunden ist, handelt es sich in Fig. 5 um das Hohlrad 11. Beim dritten Element, welches abhängig von der Schaltstellung des ersten Schaltelements 12 in der Schaltstellung A an die Getriebeeingangswelle 7 und in der Schaltstellung B gehäusefest angebunden ist, handelt es sich in der Variante der Fig. 5 um das Sonnenrad 10.

Die Variante der Fig. 5 ist insbesondere dann von Vorteil, wenn der Antriebsstrang über eine elektrische Maschine 2 verfügt, die ein hohes Drehmoment bereitstellen kann, bei welchem jedoch der Verbrennungsmotor 1 drehmomentschwach ist.

In der Variante der Fig. 5 ist das zweite Schaltelement 13 außerhalb des Getriebes 3 positioniert.

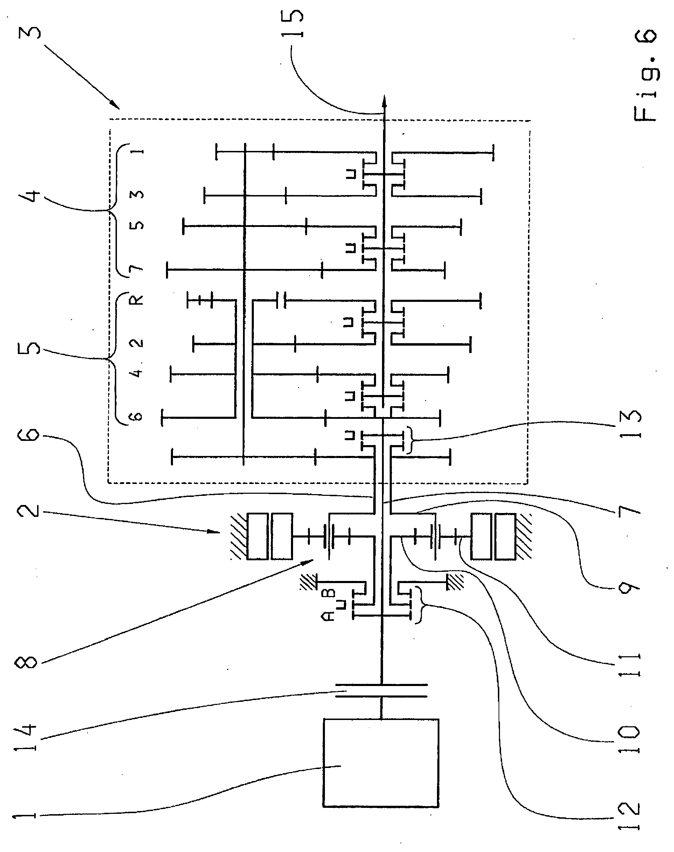

In Fig. 6, die hinsichtlich der Anbindung des Planentengetriebes 8 der Variante der Fig. 5 entspricht, ist das zweite Schaltelement 13 wiederum in das Getriebe 3 integriert.

Ferner kann in den Varianten der Fig. 5 und 6 auf die Trennkupplung 14 verzichtet werden.

Ferner ist, obwohl nicht gezeigt, auch eine andere Anbindung des Planetengetriebes 8 denkbar. Insbesondere dann, wenn das Planetengetriebe 8 als sogenanntes Plus-Getriebe ausgeführt ist, kann die elektrische Maschine 2 fest ans Sonnenrad des Planetengetriebes und die Getriebeeingangswelle 6 fest ans Hohlrad 10 des Planetengetriebes angekoppelt sein, der Steg des Planetengetriebes ist dann abhängig von der Schaltstellung des ersten Schaltelementes 12 entweder an die Getriebeeingangswelle 7 oder gehäusefest angekoppelt.

In sämtlichen Ausführungsbeispielen der Fig. 1 bis 6 ist jeweils das erste Schaltelement 12 und das zweite Schaltelement 13 als formschlüssige Klauenkupplung ausgeführt.

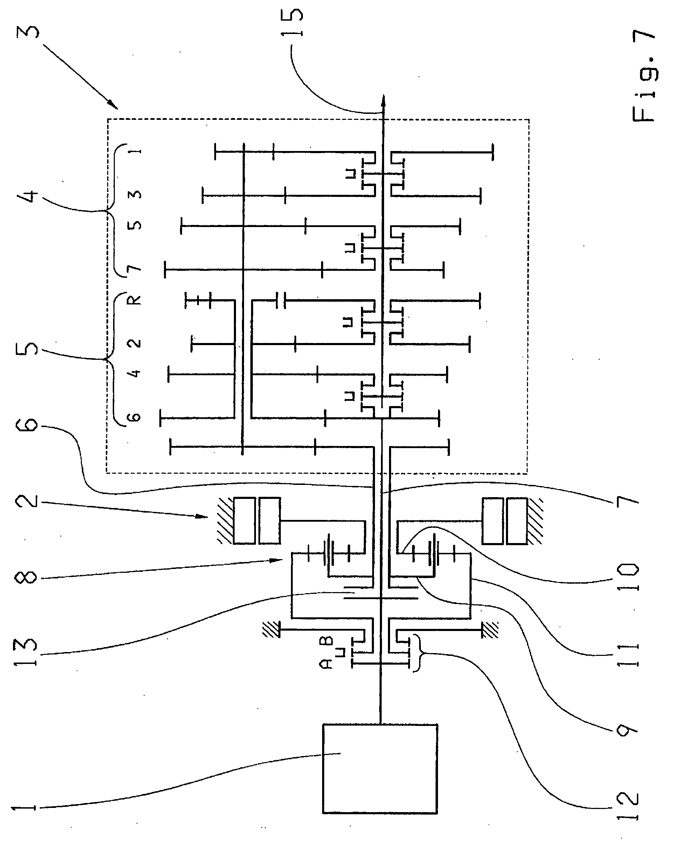

Fig. 7 zeigt demgegenüber eine Variante der Erfindung, in welcher das zweite Schaltelement 13 als reibschlüssige Kupplung ausgeführt ist.

Dabei entspricht die Variante der Fig. 7 im Wesentlichen der Variante der Fig. 2. Auch bei den Varianten der Fig. 1 und 3 bis 6 kann die in Fig. 7 gezeigte, reibschlüssige Kupplung als zweites Schaltelement 13 zum Einsatz kommen.

Nachfolgend werden bevorzugte Verfahren im Detail beschrieben.

Ein erstes, erfindungsgemäßes Verfahren zum Betreiben eines in Fig. 1 bis 7 gezeigten Antriebsstrangs bzw. einer in Fig. 1 bis 7 gezeigten Vorrichtung, die als Bestandteil des Antriebsstrangs der Anbindung von Verbrennungsmotor 1, elektrischer Maschine 2 und Getriebe 3 dient, betrifft die Umschaltung des ersten Schaltelements 12 von der ersten Schaltstellung A in die zweite Schaltstellung B und ist auch in Anspruch 10 definiert.

Nach diesem Verfahren wird dann, wenn das zweite Schaltelement 13 geschlossen und im ersten Teilgetriebe 4 eingelegt ist, oder dann, wenn das zweite Schaltelement 13 geöffnet und im zweiten Teilgetriebe 5 ein Gang eingelegt ist, zum Umschalten des ersten Schaltelements 12 von der ersten Schaltstellung A in die zweite Schaltstellung B zunächst an der elektrischen Maschine 2 Last abgebaut, vorzugsweise wird die Last an der elektrischen Maschine 2 vollständig abgebaut. Die zuvor von der elektrischen Maschine 2 aufgebrachte Last kann vollständig oder teilweise auf den Verbrennungsmotor 1 verlagert werden. Darauffolgend kann die erste Schaltstellung A am ersten Schaltelement 12 lastfrei ausgelegt werden, wobei anschließend das erste Schaltelement 12 bezogen auf die zweite Schaltstellung B über die elektrische Maschine 2, vorzugsweise über eine Drehzahlregelung der elektrischen Maschine 2, synchronisiert wird, sodass anschließend am zweiten Schaltelement 12 die zweite Schaltstellung B lastfrei eingelegt werden kann. Der Verbrennungsmotor 1 stützt bei der lastfreien Umschaltung des ersten Schaltelements 12 von der Schaltstellung A in die Schaltstellung B an der Getriebeausgangswelle 15 ein Abtriebsmoment, und zwar entweder bei geschlossenem zweitem Schaltelement 13 über das erste Teilgetriebe 4 oder bei geöffnetem zweitem Schaltelement 13 über das zweite Teilgetriebe 5.

Ein zweites, erfindungsgemäßes Verfahren, welches auch in Anspruch 11 definiert ist, betrifft die Umschaltung des Schaltelements 12 von der zweiten Schaltstellung B in die erste Schaltstellung A, nämlich dann, wenn das zweite Schaltelement 13 geschlossen und im ersten Teilgetriebe 4 eingelegt ist, oder dann, wenn das zweite Schaltelement 13 geöffnet und im zweiten Teilgetriebe 5 ein Gang eingelegt ist. In diesem Fall wird zum Umschalten des ersten Schaltelements 12 von der zweiten Schaltstellung B in die erste Schaltstellung A zunächst die elektrische Maschine 2 vorzugsweise vollständig lastfrei gemacht und deren Last zumindest teilweise auf den Verbrennungsmotor 1 gelagert. Darauffolgend kann die Schaltstellung B lastfrei ausgelegt werden und die elektrische Maschine 2 kann das erste Schaltelement 12 bezogen auf die erste Schaltstellung A synchronisieren, wobei dann anschließend die erste Schaltstellung A am ersten Schaltelement 12 lastfrei eingelegt wird. Hierbei stützt der Verbrennungsmotor 1 entweder bei geschlossenem zweitem Schaltelement 13 über das erste Teilgetriebe 4 oder bei geöffnetem zweitem Schaltelement 13 über das zweite Teilgetriebe 5 der Getriebeausgangswelle 15 des Getriebe 3 das Abtriebsmoment.

Weitere erfindungsgemäße Verfahren, die auch in Patentansprüchen 12 und 13 definiert sind, betreffen einen Antriebsstrang, bei welchem das zweite Schaltelement 13 als schlupfend betreibbares, reibschlüssiges Schaltelement 13 (siehe Fig. 7) ausgeführt ist, nämlich einerseits die Umschaltung des ersten Schaltelements 12 von der ersten Schaltstellung A in die zweite Schaltstellung B sowie umgekehrt von der zweiten Schaltstellung B in die erste Schaltstellung A.

Ein Umschalten des ersten Schaltelements 12 von der Schaltstellung B in die Schaltstellung A ohne Zugkraftunterbrechung bei reibschlüssigem, anfänglich geöffnetem, zweiten Schaltelement 13 erfolgt zum Beispiel beim Übergang vom rein elektrischen Kriechen in der Schaltstellung B ins elektrodynamische Kriechen in der Schaltstellung A. Diese Umschaltung kann zum Beispiel dann erforderlich sein, wenn längere Zeit rein elektrisches Kriechen über eine motorisch betriebene, elektrische Maschine 2 stattfindet und ein elektrischer Energiespeicher entleert wird. In diesem Fall muss dann auf ein elektrodynamisches Kriechen in der Schaltstellung A gewechselt werden, um beim elektrodynamischen Kriechen im generatorischen Betrieb der elektrischen Maschine 2 den Energiespeicher wieder stärker aufladen zu können.

Im Ausgangszustand dieses Verfahrens ist demnach am Schaltelement 12 die Schaltstellung B geschlossen, das zweite Schaltelement 13 ist geöffnet, der Verbrennungsmotor 1 läuft, im ersten Teilgetriebe 4 ist ein Gang eingelegt und das zweite Teilgetriebe 5 befindet sich in Neutralstellung. Ausgehend von diesem Ausgangszustand erfolgt zunächst ein Lastübergang von der elektrischen Maschine 2 auf das zweite Schaltelement 13, in dem das zweite Schaltelement 13 zumindest teilweise geschlossen und insbesondere bei geringen Fahrgeschwindigkeiten im Schlupf betrieben wird, wobei der Verbrennungsmotor 1 das von der elektrischen Maschine 2 bereitgestellte Moment vorzugsweise vollständig übernimmt. An der elektrischen Maschine 2 erfolgt demnach ein vollständiger Lastabbau bzw. Momentabbau, wobei darauffolgend die zweite Schaltstellung B lastfrei geöffnet bzw. ausgelegt werden kann. Nachfolgend erfolgt über eine drehzahlgeregelte, elektrische Maschine 1 eine Synchronisierung des ersten Schaltelements 12 bezogen auf die Schaltstellung A derart, dass das Schaltelement 12 bezogen auf die Schaltstellung A die aktuelle Drehzahl des Verbrennungsmotors 1 einnimmt, wobei nachfolgend die Schaltposition A am ersten Schaltelement 12 lastfrei geschlossen werden kann. Anschließend erfolgt ein Lastaufbau an der elektrischen Maschine 2, sodass das zweite Schaltelement 13 lastfrei wird. Die elektrische Maschine 2 stützt hierbei vom Verbrennungsmotor 1 bereitgestelltes Moment so ab, dass kein Moment mehr über das zweite Schaltelement 13 geleitet wird. Das Verbrennungsmotormoment des Verbrennungsmotors 1 wird dabei vorzugsweise so abgesenkt, dass das Getriebeeingangsmoment nicht erhöht wird. Dabei wirkt das Planetengetriebe 8 mit einer Übersetzung, das Schaltelement 13 ohne Übersetzung. Nachfolgend kann das Schaltelement 13 geöffnet werden.

Eine umgekehrte Überführung des ersten Schaltelements 12 von der Schaltstellung A in die Schaltstellung B ohne Zugkraftunterbrechung bei anfänglich geöffnetem, zweitem, reibschlüssigem Schaltelement 13 kann zum Beispiel bei einem Übergang vom elektrodynamischen Kriechen in elektrisches Kriechen ausgeführt werden, wobei dies insbesondere dann erfolgt, wenn längere Zeit elektrodynamisches Kriechen bei generatorisch betriebener, elektrischer Maschine 2 erfolgte und der elektrische Energiespeicher zu stark geladen wurde. In diesem Fall kann der Übergang ins rein elektrische Kriechen bei motorisch betriebener elektrischer Maschine 2 erfolgen, um so den elektrischen Energiespeicher stärker zu entladen. Im Ausgangszustand dieses Verfahrens, welches auch in Patentanspruch 13 definiert ist, ist demnach am ersten Schaltelement 12 die Schaltposition A geschlossen, das zweite Schaltelement 13 ist geöffnet, der Verbrennungsmotor 1 läuft, im ersten Teilgetriebe 4 ist ein Gang eingelegt und das zweite Teilgetriebe 5 befindet sich in einer Neutralposition. Nachfolgend erfolgt ein Lastübergang von der elektrischen Maschine 2 auf den Verbrennungsmotor 1 über ein bei geringen Fahrgeschwindigkeiten im Schlupf betriebenes, zweites Schaltelement 13. Vorzugsweise erfolgt an der elektrischen Maschine 2 ein vollständiger Lastabbau, sodass das Schaltelement 12 bezogen auf die Schaltstellung A lastfrei wird, sodass die Schaltposition A lastfrei ausgelegt werden kann. Nachfolgend erfolgt eine Synchronisierung des Schaltelements 12 bezogen auf die Schaltstellung B über eine vorzugsweise geregelt betriebene elektrische Maschine 2, wobei nachfolgend die Schaltposition B am ersten Schaltelement 12 lastfrei eingelegt werden kann. Nachfolgend erfolgt vorzugsweise ein Lastübergang vom Verbrennungsmotor 1 auf die elektrische Maschine 2, nämlich derart, dass an der elektrischen Maschine 2 ein Lastaufbau und am Verbrennungsmotor 1 ein Lastabbau durchgeführt wird.

Das zweite Schaltelement 13 wird durch den Lastabbau am Verbrennungsmotor 1 lastfrei. Nachfolgend wird das zweite Schaltelement 13 geöffnet. Anschließend kann elektrisches Kriechen über eine motorisch betriebene elektrische Maschine 2 über einen Gang des ersten Teilgetriebes 4 erfolgen. Der Verbrennungsmotor 1 ist abgekoppelt, da die Schaltposition A ausgelegt ist und das zweite Schaltelement 13 geöffnet ist und im zweiten Teilgetriebe 5 eine Neutralstellung eingelegt ist. Der Verbrennungsmotor 1 kann im Leerlauf betrieben oder abgeschaltet werden.

Ein weiteres erfindungsgemäßes Verfahren, welches auch in Patentanspruch 14 definiert ist, betrifft ein Umschalten des ersten Schaltelements 12 von der ersten Schaltstellung A in die zweite Schaltstellung B im Kriechbetrieb des Antriebsstrangs unter Last bei zeitweise schlupfender Trennkupplung 14. Ein Kriechbetrieb bedeutet hier, dass die Fahrgeschwindigkeit des Antriebsstrangs so gering ist, dass bei geschlossener Trennkupplung 14 der elektrodynamische Betrieb in der Schaltstellung A des zweiten Schaltelements 14 nicht überbrückt werden kann, weil sonst die Drehzahl des Verbrennungsmotors 1 zu gering wäre. Dem kann durch eine zeitweise schlupfend betriebene Trennkupplung 14 entgegengewirkt werden. Ohne Trennkupplung 14 kann dieser Umschaltvorgang am Schaltelement 12 nur mit Zugkraftunterbrechung erfolgen.

Der Ausgangszustand für dieses Verfahren zum Umschalten des Schaltelements 12 von der Schaltstellung A in die Schaltstellung B im Kriechbetrieb unter Last mit zeitweise schlupfender Trennkupplung 14 sieht vor, dass im Schaltelement 12 die Schaltstellung A geschaltet ist, dass die Trennkupplung 14 geschlossen ist, dass im ersten Teilgetriebe 4 ein Gang eingelegt ist, dass sich das zweite Teilgetriebe 5 in Neutral befindet und das zweite Schaltelement 13 geöffnet ist. Ausgehend von dieser Ausgangssituation des Antriebsstrangs wird zunächst die Trennkupplung 14 durch Absenken der Übertragungsfähigkeit derselben in einen Schlupfzustand überführt. Anschließend erfolgt eine Absenkung der Drehzahl der Getriebeeingangswelle 7 auf die Drehzahl der Getriebeeingangswelle 6, sodass am Planetengetriebe 8 ein Blockumlauf realisiert werden kann. Die hierzu erforderliche Drehzahlregelung erfolgt über eine Regelung des Moments der elektrischen Maschine 2 sowie des von der Trennkupplung 14 übertragenen Moments. Anschließend wird das zweite Schaltelement 13 geschlossen oder alternativ im zweiten Teilgetriebe 5 ein Gang eingelegt.

Zum Gangeinlegen im zweiten Teilgetriebe 5 muss die Drehzahl der Getriebeeingangswelle 7 auf den Gang im zweiten Teilgetriebe 5 synchronisiert werden, also der Blockumlauf am Planetengetriebe 8 verlassen werden. Nachdem das zweite Schaltelernent 13 geschlossen oder im zweiten Teilgetriebe 5 ein Gang eingelegt wurde, kann die Last an der elektrischen Maschine 2 abgebaut werden. Am Verbrennungsmotor 1 und an der Trennkupplung 14 wird nachfolgend die Last angepasst, um ein in etwa konstantes Antriebsmoment an der Getriebeausgangswelle 15 zu gewährleisten. Dabei werden vorzugsweise das Moment des Verbrennungsmotors 1 und das von der Trennkupplung 14 übertragene Moment angehoben, da die Übersetzung des Planetengetriebes 8 nicht mehr wirksam ist. Würde jedoch die Trennkupplung 14 zu stark belastet, so wird das Moment des Verbrennungsmotors 1 nicht angehoben, stattdessen wird dann ein Absinken der Zugkraft an der Getriebeausgangswelle 15 in Kauf genommen. Sobald die elektrische Maschine 2 lastfrei ist, kann am Schaltelement 12 der Schaltstellung A lastfrei ausgelegt werden, das Schaltelement 12 wird bezogen auf die Schaltposition B mit einer Drehzahlregelung der elektrischen Maschine 2 synchronisiert und anschließend wird die Schaltposition B eingelegt. Anschließend übernimmt die elektrische Maschine 2 das Antriebsmoment, in dem an der elektrischen Maschine 2 ein Lastaufbau erfolgt. Am Verbrennungsmotor 1 erfolgt dann ein Lastabbau. Das Schaltelement 13 kann dann wieder geöffnet bzw. der Gang im zweiten Teilgetriebe 5 ausgelegt werden. Die Trennkupplung 14 kann geöffnet oder geschlossen werden. Den Verbrennungsmotor 1 stützt entweder über das zweite Teilgetriebe 5 bei geöffnetem Schaltelement 13 oder über das Teilgetriebe 4 bei geschlossenem Schaltelement 13 das Abtriebsmoment, während das Schaltelement 12 lastfrei zwischen der Schaltposition A und der Schaltposition B umgeschaltet wird. Die Trennkupplung 14 befindet sich hierbei zumindest zeitweise im Schlupf.

Ein weiteres erfindungsgemäßes Verfahren, welches auch in Patentanspruch 15 definiert ist, betrifft die Umschaltung des ersten Schaltelements 12 von der zweiten Schaltstellung B in die erste Schaltstellung A im Kriechbetrieb des Antriebsstrangs unter Last mit zeitweise schlupfender Trennkupplung 14, wobei unter einem Kriechbetrieb hier eine Situation des Antriebsstrangs zu verstehen ist, in welcher die Fahrgeschwindigkeit desselben so gering ist, dass der Verbrennungsmotor 1 nicht in einem festen Gang fahren kann, weil sonst die Verbrennungsmotordrehzahl zu gering wäre.

Diesem Umstand kann durch eine zeitweise schlupfende Trennkupplung 14 entgegengewirkt werden. Bei nicht vorhandener Trennkupplung 14 kann die Umschaltung nur mit Zugkraftunterbrechung erfolgen. Diese Umschaltung kann notwendig werden, wenn während eines rein elektrischen Kriechens der elektrische Energiespeicher zu leer wird und auf elektrodynamisches Kriechen umgeschaltet werden muss.

Die Ausgangssituation des Antriebsstrangs im rein elektrischen Kriechen ist folgende, dass im Schaltelement 12 die Schaltposition B geschaltet ist, dass die Trennkupplung 14 geöffnet oder geschlossen ist, dass im ersten Teilgetriebe 4 ein Gang eingelegt ist, dass sich das zweite Teilgetriebe 5 in der Neutralposition befindet und dass das zweite Schaltelement 13 geöffnet ist. Beim erfindungsgemäßen Verfahren wird zunächst bei zuvor geschlossener Trennkupplung 14 dieselbe geöffnet oder bei zuvor geöffneter Trennkupplung 14 dieselbe geöffnet gehalten, anschließend wird das zweite Schaltelement 13 geschlossen oder alternativ im zweiten Teilgetriebe 5 ein Gang eingelegt. Eine zum Gangeinlegen erforderliche Synchronisierung der Getriebeeingangswelle des zweiten Teilgetriebes 5 erfolgt entweder bei offener Trennkupplung 14 durch Synchronisierung im Radsatz des Getriebes oder durch teilweises Schließen der Trennkupplung 14 über den Verbrennungsmotor 1. Nach dem Schließen des zweiten Schaltelements 13 oder dem Einlegen eines Gangs im zweiten Teilgetriebe 5 wird Antriebsmoment auf den Verbrennungsmotor 1 über die schlupfend betriebene Trennkupplung 14 übertragen, wozu die Übertragungsfähigkeit der Trennkupplung 14 entsprechend erhöht wird. Gleichzeitig zum Lastaufbau am Verbrennungsmotor 1 erfolgt an der elektrischen Maschine 2 ein Lastabbau, wobei anschließend am Schaltelement 12 die Schaltposition B lastfrei ausgelegt werden kann. Nachfolgend wird durch eine drehzahlgeregelte elektrische Maschine 2 das Schaltelement 12 in Bezug auf die Schaltstellung A synchronisiert und die Schaltstellung A lastfrei eingelegt. Die elektrische Maschine 2 stützt dann soviel Moment ab, dass das Antriebsmoment vom Verbrennungsmotor 1 über die Trennkupplung 14 und über das Planetengetriebe 8 geleitet wird und das zweite Schaltelement 13 bzw. der im zweiten Teilgetriebe 5 eingelegte Gang keine Last mehr überträgt. Während des Lastabbaus an der elektrischen Maschine 2 wird das Moment des Verbrennungsmotors 1 bzw. der Trennkupplung 14 so angepasst, dass das an der Getriebeausgangswelle 15 wirkende Antriebsmoment in etwa konstant bleibt.

Das Moment des Verbrennungsmotors 1 bzw. der Trennkupplung 14 können abgesenkt werden, da die Übersetzung des Planetengetriebes 8 wirksam wird. Nachfolgend wird entweder das lastfreie Schaltelement 13 geöffnet oder im zweiten Teilgetriebe 5 ein Gang lastfrei ausgelegt. Dann, wenn die Drehzahl der zweiten Eingangswelle 7 des zweiten Teilgetriebes 5 auf die Drehzahl des Verbrennungsmotors 1 synchronisiert ist, wenn also die Trennkupplung 14 synchron ist, kann die Trennkupplung 14 geschlossen werden. Diese Synchronisierung erfolgt durch Regelung des von der elektrischen Maschine 2 bereitgestellten und von der Trennkupplung 14 übertragenen Moments. Dann, wenn die Trennkupplung 14 geschlossen ist, ist der gewünschte Umschaltvorgang beendet und es kann in der Schaltstellung A elektrodynamisch bei generatorisch betriebener elektrischer Maschine 2 ein Kriechbetrieb bereitgestellt werden.

### Bezugszeichen

- 1: Verbrennungsmotor
- 2: elektrische Maschine
- 3: Getriebe
- 4: erstes Teilgetriebe
- 5: zweites Teilgetriebe
- 6: Getriebeeingangswelle
- 7: Getriebeeingangswelle
- 8: Planetengetriebe
- 9: Steg
- 10: Sonnenrad
- 11: Hohlrad
- 12: erstes Schaltelement
- 13: zweites Schaltelement
- 14: Trennkupplung
- 15: Getriebeausgangswelle

## Patentansprüche

1. Vorrichtung für einen Antriebsstrang eines Hybridfahrzeugs, mit einem die Elemente Steg (9), Sonnenrad (10) und Hohlrad (11) aufweisenden Planetengetriebe (8) sowie einem ersten Schaltelement (12) und einem zweiten Schaltelement (13),
- wobei ein erstes Element dieser Elemente (9, 10, 11) des Planetengetriebes (8) der festen Anbindung einer Getriebeeingangswelle (6) eines ersten Teilgetriebes (4) eines Getriebes (3) dient,
- wobei ein zweites Element dieser Elemente (9, 10, 11) des Planetengetriebes (8) der festen Anbindung einer elektrischen Maschine (2) eines Hybridantriebs dient,
- wobei durch das zweite Schaltelement (13) die Getriebeeingangswelle (6) des ersten Teilgetriebes (4) und eine Getriebeeingangswelle (7) eines zweiten Teilgetriebes (5) des Getriebes (3) aneinander koppelbar, bzw. voneinander trennbar sind,
- wobei ein Verbrennungsmotor (1) des Hybridantriebs (1) an die Getriebeeingangswelle (7) des zweiten Teilgetriebes (5) koppelbar ist,
- **dadurch gekennzeichnet, dass** ein drittes Element dieser Elemente (9, 10, 11) des Planetengetriebes (8) durch das erste Schaltelement (12) in einer ersten Schaltstellung (A) des ersten Schaltelements (12) an die Getriebeeingangswelle (7) des zweiten Teilgetriebes (5)koppelbar ist und in einer zweiten Schaltstellung (B) des ersten Schaltelements (12) gehäuseseitig bzw. statorseitig anbindbar ist.

2. Vorrichtung nach Anspruch 1, **dadurch gekennzeichnet, dass** das Planetengetriebe (8) in der ersten Schaltstellung (A) des ersten Schaltelements (12) als Überlagerungsgetriebe und in der zweiten Schaltstellung (B) als Konstantübersetzung dient.

3. Vorrichtung nach Anspruch 1 oder 2, **dadurch gekennzeichnet, dass** in einer dritten, geöffneten Schaltstellung des ersten Schaltelements (12) das dritte Element des Planetengetriebes (8) frei drehbar ist.

4. Vorrichtung nach einem der Ansprüche 1 bis 3, **dadurch gekennzeichnet, dass** bei geschlossenem zweiten Schaltelement (13) das erste Element des Planetengetriebes (8) fest an die Getriebeeingangswellen (6, 7) beider Teilgetriebe (4, 5) gekoppelt ist, wohingegen bei geöffnetem zweiten Schaltelement (13) das erste Element des Planetengetriebes (8) ausschließlich fest an die Getriebeeingangswelle (6) des ersten Teilgetriebes (4) gekoppelt ist.

5. Antriebsstrang eines Hybridfahrzeugs,
- mit einem einen Verbrennungsmotor (1) und eine elektrische Maschine (2) umfassenden Hybridantrieb,
- mit einem zwei parallel geschaltete Teilgetriebe (4, 5) und je Teilgetriebe eine Getriebeeingangswelle (6, 7) umfassenden Getriebe (3),
- mit einem die Elemente Steg (9), Sonnenrad (10) und Hohlrad (11) aufweisenden Planetengetriebe (8),
- mit einem ersten Schaltelement (12) und einem zweiten Schaltelement (13),
- wobei der Verbrennungsmotor (1) des Hybridantriebs an die Getriebeeingangswelle (7) des zweiten Teilgetriebes (5) gekoppelt oder koppelbar ist,
- wobei durch das zweite Schaltelement (13) die Getriebeeingangswelle (6) des ersten Teilgetriebes (4) und die Getriebeeingangswelle (7) des zweiten Teilgetriebes (5) aneinander koppelbar, bzw. voneinander trennbar sind,
- wobei ein erstes Element der Elemente (9, 10, 11) des Planetengetriebes (8) fest mit der Getriebeeingangswelle (6) des ersten Teilgetriebes (4) verbunden ist,
- wobei ein zweites Element der Elemente (9, 10, 11) des Planetengetriebes (8) fest mit der elektrischen Maschine (2) des Hybridantriebs verbunden ist,
- **dadurch gekennzeichnet, dass** durch das erste Schaltelement (12) ein drittes Element der Elemente (9, 10, 11) des Planetengetriebes (8) in einer ersten Schaltstellung (A) des ersten Schaltelements (12) an die Getriebeeingangswelle (7) des zweiten Teilgetriebes (5) koppelbar ist und in einer zweiten Schaltstellung (B) des ersten Schaltelements (12) gehäuseseitig bzw. statorseitig anbindbar ist.

6. Antriebsstrang nach Anspruch 5, **gekennzeichnet durch** Merkmale nach einem oder mehreren der Ansprüche 2 bis 4.

7. Antriebsstrang nach Anspruch 5 oder 6, **dadurch gekennzeichnet, dass** die Getriebeeingangswelle (7) des zweiten Teilgetriebes (5) kupplungslos an den Verbrennungsmotor (1) gekoppelt ist.

8. Antriebsstrang nach Anspruch 5 oder 6, **dadurch gekennzeichnet, dass** die Getriebeeingangswelle (7) des zweiten Teilgetriebes (5) über eine Trennkupplung (14) an den Verbrennungsmotor (1) koppelbar ist.

9. Antriebsstrang nach einem der Ansprüche 5 bis 8, **dadurch gekennzeichnet, dass** das zweite Schaltelement (13) in einen Radsatz des Getriebes (3) integriert ist.

10. Verfahren zum Betreiben einer Vorrichtung nach einem der Ansprüche 1 bis 4 bzw. eines Antriebsstrangs nach einem der Ansprüche 5 bis 9, **dadurch gekennzeichnet, dass** dann, wenn das zweite Schaltelement (13) geschlossen ist und im ersten Teilgetriebe (4) ein Gang eingelegt ist, oder dann, wenn das zweite Schaltelement (13) geöffnet ist und im zweiten Teilgetriebe (5) ein Gang eingelegt ist, zum Umschalten des ersten Schaltelements (12) von der ersten Schaltstellung (A) in die zweite Schaltstellung (B) zunächst die elektrische Maschine (2) vorzugsweise vollständig lastfrei gemacht und deren Last vollständig oder teilweise auf den Verbrennungsmotor (1) verlagert wird, darauffolgend die erste Schaltstellung (A) lastfrei ausgelegt wird, anschließend über die elektrische Maschine (2) das erste Schaltelement (12) bezogen auf die zweite Schaltstellung (B) synchronisiert wird und darauffolgend die zweite Schaltstellung (B) lastfrei eingelegt wird, wobei der Verbrennungsmotor (1) bei geschlossenem zweiten Schaltelement (13) über das erste Teilgetriebe (4) und bei geöffnetem zweiten Schaltelement (13) über das zweite Teilgetriebe (5) an einer Getriebeausgangswelle (15) des Getriebes (3) ein Moment bereitstellt.

11. Verfahren zum Betreiben einer Vorrichtung nach einem der Ansprüche 1 bis 4 bzw. eines Antriebsstrangs nach einem der Ansprüche 5 bis 9, **dadurch gekennzeichnet, dass** dann, wenn das zweite Schaltelement (13) geschlossen ist und im ersten Teilgetriebe (4) ein Gang eingelegt ist, oder dann, wenn das zweite Schaltelement (13) geöffnet ist und im zweiten Teilgetriebe (5) ein Gang eingelegt ist, zum Umschalten des ersten Schaltelements (12) von der zweiten Schaltstellung (B) in die erste Schaltstellung (A) zunächst die elektrische Maschine (2) vorzugsweise vollständig lastfrei gemacht und deren Last vollständig oder teilweise auf den Verbrennungsmotor (1) verlagert wird, darauffolgend die zweite Schaltstellung (B) lastfrei ausgelegt wird, anschließend über die elektrische Maschine (2) das erste Schaltelement (12) bezogen auf die erste Schaltstellung (A) synchronisiert wird und darauffolgend die erste Schaltstellung (A) lastfrei eingelegt wird, wobei der Verbrennungsmotor (1) bei geschlossenem zweiten Schaltelement (13) über das erste Teilgetriebe (4) und bei geöffnetem zweiten Schaltelement (13) über das zweite Teilgetriebe (5) an einer Getriebeausgangswelle (15) des Getriebes (3) ein Moment bereitstellt.

12. Verfahren zum Betreiben einer Vorrichtung nach einem der Ansprüche 1 bis 4 bzw. eines Antriebsstrangs nach einem der Ansprüche 5 bis 9, **dadurch gekennzeichnet, dass** dann, wenn das zweite Schaltelement (13) als schlupfend betreibbares, reibschlüssiges Schaltelement ausgeführt ist, zum Umschalten des ersten Schaltelements (12) von der zweiten Schaltstellung (B) in die erste Schaltstellung (A) ohne Zugkraftunterbrechung bei anfänglich geöffnetem zweiten Schaltelement (13) zunächst die elektrische Maschine (2) vollständig lastfrei gemacht und deren Last vollständig über das zweite Schaltelement (13), welches hierzu zumindest teilweise geschlossen wird und schlupfend betreibbar ist, auf den Verbrennungsmotor (1) verlagert wird, darauffolgend die zweite Schaltstellung (B) lastfrei ausgelegt wird, anschließend über die elektrische Maschine (2) das erste Schaltelement (12) bezogen auf die erste Schaltstellung (A) synchronisiert wird und darauffolgend die erste Schaltstellung (A) lastfrei eingelegt wird, anschließend an der elektrischen Maschine (2) ein Lastaufbau und am Verbrennungsmotor (1) ein Lastabbau erfolgt, sodass das zweite Schaltelement (13) vorzugsweise lastfrei und darauffolgend geöffnet wird.

13. Verfahren zum Betreiben einer Vorrichtung nach einem der Ansprüche 1 bis 4 bzw. eines Antriebsstrangs nach einem der Ansprüche 5 bis 9, **dadurch gekennzeichnet, dass** dann, wenn das zweite Schaltelement (13) als schlupfend betreibbares, reibschlüssiges Schaltelement ausgeführt ist, zum Umschalten des ersten Schaltelements (12) von der ersten Schaltstellung (A) in die zweite Schaltstellung (B) ohne Zugkraftunterbrechung bei anfänglich geöffnetem zweiten Schaltelement (13) zunächst die elektrische Maschine (2) vollständig lastfrei gemacht und deren Last vollständig über das zweite Schaltelement (13), welches hierzu zumindest teilweise geschlossen wird und schlupfend betreibbar ist, auf den Verbrennungsmotor (1) verlagert wird, darauffolgend die erste Schaltstellung (A) lastfrei ausgelegt wird, anschließend über die elektrische Maschine (2) das erste Schaltelement (12) bezogen auf die zweite Schaltstellung (B) synchronisiert wird und darauffolgend die zweite Schaltstellung (B) lastfrei eingelegt wird, anschließend an der elektrischen Maschine (2) ein Lastaufbau und am Verbrennungsmotor (1) ein Lastabbau erfolgt, sodass das zweite Schaltelement (13) vorzugsweise lastfrei und darauffolgend geöffnet wird.

14. Verfahren zum Betreiben einer Vorrichtung nach einem der Ansprüche 1 bis 4 bzw. eines Antriebsstrangs nach einem der Ansprüche 5 bis 9, **dadurch gekennzeichnet, dass** dann, wenn die Getriebeeingangswelle (7) des zweiten Teilgetriebes (5) über eine schlupfend betreibbare, reibschlüssige Trennkupplung (14) an den Verbrennungsmotor (1) gekoppelt ist, zum Umschalten des ersten Schaltelements (12) von der ersten Schaltstellung (A) in die zweite Schaltstellung (B) bei anfänglich vollständig geschlossener Trennkupplung (14), bei anfänglich geöffnetem zweiten Schaltelement (13), bei anfänglich im ersten Teilgetriebe (4) eingelegtem Gang und anfänglich in Neutral befindlichem zweiten Teilgetriebe (5) zunächst die Trennkupplung (14) im Schlupf betrieben und die Drehzahl der Getriebeeingangswelle (7) des zweiten Teilgetriebes (5) auf die Drehzahl der Getriebeeingangswelle (6) des ersten Teilgetriebes (4) angenähert wird, anschließend das zweite Schaltelement (13) geschlossen oder im zweiten Teilgetriebe (5) ein Gang eingelegt wird, darauffolgend an der elektrischen Maschine (2) Last abgebaut wird, darauffolgend die erste Schaltstellung (A) ausgelegt wird, anschließend über die elektrische Maschine (2) das erste Schaltelement (12) bezogen auf die zweite Schaltstellung (B) synchronisiert wird und darauffolgend die zweite Schaltstellung (B) eingelegt wird.

15. Verfahren zum Betreiben einer Vorrichtung nach einem der Ansprüche 1 bis 4 bzw. eines Antriebsstrangs nach einem der Ansprüche 5 bis 9, **dadurch gekennzeichnet, dass** dann, wenn die Getriebeeingangswelle (7) des zweiten Teilgetriebes (5) über eine schlupfend betreibbare, reibschlüssige Trennkupplung (14) an den Verbrennungsmotor (1) gekoppelt ist, zum Umschalten des ersten Schaltelements (12) von der zweiten Schaltstellung (B) in die erste Schaltstellung (A) bei anfänglich geöffnetem zweiten Schaltelement (13), bei anfänglich im ersten Teilgetriebe (4) eingelegtem Gang und bei anfänglich in Neutral befindlichem zweiten Teilgetriebe (5) zunächst die Trennkupplung (14) geöffnet oder offen gehalten wird, anschließend das zweite Schaltelement (13) geschlossen oder im zweiten Teilgetriebe (5) ein Gang eingelegt wird, darauffolgend bei schlupfend betriebener Trennkupplung (14) am Verbrennungsmotor (1) ein Lastaufbau und an der elektrischen Maschine (2) ein Lastabbau durchgeführt wird, darauffolgend die zweite Schaltstellung (B) ausgelegt wird, anschließend über die elektrische Maschine (2) das erste Schaltelement (12) bezogen auf die erste Schaltstellung (A) synchronisiert wird und darauffolgend die erste Schaltstellung (A) eingelegt wird.

## Claims

1. Apparatus for a drive train of a hybrid vehicle, having a planetary gear mechanism (8) which has the elements spider (9), sun gear (10) and internal gear (11), and having a first shifting element (12) and a second shifting element (13),
- a first element of the said elements (9, 10, 11) of the planetary gear mechanism (8) serving to fixedly attach a transmission input shaft (6) of a first component transmission (4) of a transmission (3),
- a second element of the said elements (9, 10, 11) of the planetary gear mechanism (8) serving to fixedly attach an electric machine (2) of a hybrid drive,
- it being possible for the transmission input shaft (6) of the first component transmission (4) and a transmission input shaft (7) of a second component transmission (5) of the transmission (3) to be coupled to one another or disconnected from one another by way of the second shifting element (13),
- it being possible for an internal combustion engine (1) of the hybrid drive (1) to be coupled to the transmission input shaft (7) of the second component transmission (5),
- **characterized in that**, by way of the first shifting element (12), a third element of the said elements (9, 10, 11) of the planetary gear mechanism (8) can be coupled to the transmission input shaft (7) of the second component transmission (5) in a first shifting position (A) of the first shifting element (12) and can be attached on the housing side or stator side in a second shifting position (B) of the first shifting element (12).

2. Apparatus according to Claim 1, **characterized in that** the planetary gear mechanism (8) serves as a variable ratio gear unit in the first shifting position (A) of the first shifting element (12) and as a constant transmission ratio means in the second shifting position (B).

3. Apparatus according to Claim 1 or 2, **characterized in that** the third element of the planetary gear mechanism (8) can be freely rotated in a third, open shifting position of the first shifting element (12).

4. Apparatus according to one of Claims 1 to 3, **characterized in that**, if the second shifting element (13) is closed, the first element of the planetary gear mechanism (8) is coupled fixedly to the transmission input shaft (6, 7) of both component transmissions (4, 5), whereas, if the second shifting element (13) is open, the first element of the planetary gear mechanism (8) is exclusively coupled fixedly to the transmission input shaft (6) of the first component transmission (4).

5. Drive train of a hybrid vehicle,
- having a hybrid drive which comprises an internal combustion engine (1) and an electric machine (2),
- having a transmission (3) which comprises two component transmissions (4, 5) which are connected in parallel and one transmission input shaft (6, 7) per component transmission,
- having a planetary gear mechanism (8) which has the elements spider (9), sun gear (10) and internal gear (11),
- having a first shifting element (12) and a second shifting element (13),
- the internal combustion engine (1) of the hybrid drive being coupled or being capable of being coupled to the transmission input shaft (7) of the second component transmission (5),
- it being possible for the transmission input shaft (6) of the first component transmission (4) and the transmission input shaft (7) of the second component transmission (5) to be coupled to one another or disconnected from one another by way of the second shifting element (13),
- a first element of the elements (9, 10, 11) of the planetary gear mechanism (8) being connected fixedly to the transmission input shaft (6) of the first component transmission (4),
- a second element of the elements (9, 10, 11) of the planetary gear mechanism (8) being connected fixedly to the electric machine (2) of the hybrid drive,
- **characterized in that**, by way of the first shifting element (12), a third element of the elements (9, 10, 11) of the planetary gear mechanism (8) can be coupled to the transmission input shaft (7) of the second component transmission (5) in a first shifting position (A) of the first shifting element (12) and can be attached on the housing side or stator side in a second shifting position (B) of the first shifting element (12).

6. Drive train according to Claim 5, **characterized by** features according to one or more of Claims 2 to 4.

7. Drive train according to Claim 5 or 6, **characterized in that** the transmission input shaft (7) of the second component transmission (5) is coupled to the internal combustion engine (1) in a clutchless manner.

8. Drive train according to Claim 5 or 6, **characterized in that** the transmission input shaft (7) of the second component transmission (5) can be coupled to the internal combustion engine (1) via a separating clutch (14).

9. Drive train according to one of Claims 5 to 8, **characterized in that** the second shifting element (13) is integrated into a wheel set of the transmission (3).

10. Method for operating an apparatus according to one of Claims 1 to 4 and/or a drive train according to one of Claims 5 to 9, **characterized in that**, when the second shifting element (13) is closed and a gear is engaged in the first component transmission (4), or when the second shifting element (13) is open and a gear is engaged in the second component transmission (5), in order to switch over the first shifting element (12) from the first shifting position (A) into the second shifting position (B) first of all the electric machine (2) is preferably made completely load-free and its load is shifted completely or partially to the internal combustion engine (1), following this the first shifting position (A) is disengaged in a load-free manner, subsequently the first shifting element (12) is synchronized in relation to the second shifting position (B) via the electric machine (2), and following this the second shifting position (B) is engaged in a load-free manner, the internal combustion engine (1) providing a torque at a transmission output shaft (15) of the transmission (3) via the first component transmission (4) if the second shifting element (13) is closed and via the second component transmission (5) if the second shifting element (13) is open.

11. Method for operating an apparatus according to one of Claims 1 to 4 and/or a drive train according to one of Claims 5 to 9, **characterized in that**, when the second shifting element (13) is closed and a gear is engaged in the first component transmission (4), or when the second shifting element (13) is open and a gear is engaged in the second component transmission (5), in order to switch over the first shifting element (12) from the second shifting position (B) into the first shifting position (A), first of all the electric machine (2) is preferably made completely load-free and its load is shifted completely or partially to the internal combustion engine (1), following this the second shifting position (B) is disengaged in a load-free manner, subsequently the first shifting element (12) is synchronized in relation to the first shifting position (A) via the electric machine (2), and following this the first shifting position (A) is engaged in a load-free manner, the internal combustion engine (1) providing a torque at a transmission output shaft (15) of the transmission (3) via the first component transmission (4) if the second shifting element (13) is closed and via the second component transmission (5) if the second shifting element (13) is open.

12. Method for operating an apparatus according to one of Claims 1 to 4 and/or a drive train according to one of Claims 5 to 9, **characterized in that**, when the second shifting element (13) is configured as a frictionally locking shifting element which can be operated with slip, in order to switch over the first shifting element (12) from the second shifting position (B) into the first shifting position (A) without tractive power interruption with an initially open second shifting element (13), first of all the electric machine (2) is made completely load-free and its load is shifted completely to the internal combustion engine (1) via the second shifting element (13) which is at least partially closed to this end and can be operated with slip, following this the second shifting position (B) is disengaged in a load-free manner, subsequently the first shifting element (12) is synchronized in relation to the first shifting position (A) via the electric machine (2), and following this the first shifting position (A) is engaged in a load-free manner, and subsequently a load build-up takes place at the electric machine (2) and a load dissipation takes place at the internal combustion engine (1), with the result that the second shifting element (13) preferably becomes load-free and is opened following this.

13. Method for operating an apparatus according to one of Claims 1 to 4 and/or a drive train according to one of Claims 5 to 9, **characterized in that**, when the second shifting element (13) is configured as a frictionally locking shifting element which can be operated with slip, in order to switch over the first shifting element (12) from the first shifting position (A) into the second shifting position (B) without tractive power interruption with an initially open second shifting element (13), first of all the electric machine (2) is made completely load-free and its load is shifted completely to the internal combustion engine (1) via the second shifting element (13) which is at least partially closed to this end and can be operated with slip, following this the first shifting position (A) is disengaged in a load-free manner, subsequently the first shifting element (12) is synchronized in relation to the second shifting position (B) via the electric machine (2), and following this the second shifting position (B) is engaged in a load-free manner, and subsequently a load build-up takes place at the electric machine (2) and a load dissipation takes place at the internal combustion engine (1), with the result that the second shifting element (13) preferably becomes load-free and is opened following this.

14. Method for operating an apparatus according to one of Claims 1 to 4 and/or a drive train according to one of Claims 5 to 9, **characterized in that**, when the transmission input shaft (7) of the second component transmission (5) is coupled to the internal combustion engine (1) via a frictionally locking separating clutch (14) which can be operated with slip, in order to switch over the first shifting element (12) from the first shifting position (A) into the second shifting position (B) with an initially completely closed separating clutch (14), with an initially open second shifting element (13), with a gear which is initially engaged in the first component transmission (4) and a second component transmission (5) which is initially in neutral, first of all the separating clutch (14) is operated with slip and the rotational speed of the transmission input shaft (7) of the second component transmission (5) is approximated to the rotational speed of the transmission input shaft (6) of the first component transmission (4), subsequently the second shifting element (13) is closed or a gear is engaged in the second component transmission (5), following this load is dissipated at the electric machine (2), following this the first shifting position (A) is disengaged, subsequently the first shifting element (12) is synchronized in relation to the second shifting position (B) by the electric machine (2), and the second shifting position (B) is engaged following this.

15. Method for operating an apparatus according to one of Claims 1 to 4 and/or a drive train according to one of Claims 5 to 9, **characterized in that**, when the transmission input shaft (7) of the second component transmission (5) is coupled to the internal combustion engine (1) via a frictionally locking separating clutch (14) which can be operated with slip, in order to switch over the first shifting element (12) from the second shifting position (B) into the first shifting position (A) with an initially open second shifting element (13), with a gear which is initially engaged in the first component transmission (4) and with a second component transmission (5) which is initially in neutral, first of all the separating clutch (14) is opened or held open, subsequently the second shifting element (13) is closed or a gear is engaged in the second component transmission (5), following this a load build-up is carried out at the internal combustion engine (1) and a load dissipation is carried out at the electric machine (2) with a separating clutch (14) which is operated with slip, following this the second shifting position (B) is disengaged, subsequently the first shifting element (12) is synchronized in relation to the first shifting position (A) via the electric machine (2), and the first shifting position (A) is engaged following this.

## Revendications

1. Dispositif pour une chaîne cinématique d'un véhicule hybride, avec un engrenage planétaire (8) comprenant les éléments suivants : étai (9), roue solaire (10) et roue creuse (11) ainsi qu'avec un premier élément de changement de vitesse (12) et un deuxième élément de changement de vitesse (13) ;
- un premier élément parmi ces éléments (9, 10, 11) de l'engrenage planétaire (8) servant de jonction fixe d'un arbre d'entrée de boîte de vitesses (6) d'une première partie de boîte de vitesses (4) d'une boîte de vitesses (3) ;
- un deuxième élément parmi ces éléments (9, 10, 11) de l'engrenage planétaire (8) servant de jonction fixe d'une machine électrique (2) d'un entraînement hybride ;
- l'arbre d'entrée de boîte de vitesses (6) de la première partie de boîte de vitesses (4) et un arbre d'entrée de boîte de vitesses (7) d'une deuxième partie de boîte de vitesses (5) de la boîte de vitesses (3) pouvant être couplés l'un avec l'autre et/ou être séparés l'un de l'autre par le biais du deuxième élément de changement de vitesse (13) ;
- un moteur à combustion interne (1) de l'entraînement hybride (1) pouvant être couplé à l'arbre d'entrée de boîte de vitesses (7) de la deuxième partie de boîte de vitesses (5) ;
- **caractérisé en ce qu'**un troisième élément parmi ces éléments (9, 10, 11) de l'engrenage planétaire (8) peut être couplé côté carter et/ou côté stator à l'arbre d'entrée de boîte de vitesses (7) de la deuxième partie de boîte de vitesses (5) par le biais du premier élément de changement de vitesse (12), dans une première position de changement de vitesse (A) du premier élément de changement de vitesse (12) et dans une deuxième position de changement de vitesse (B) du premier élément de changement de vitesse (12).

2. Dispositif selon la revendication 1, **caractérisé en ce que** l'engrenage planétaire (8) sert de boîte de vitesses hétérodyne dans la première position de changement de vitesse (A) du premier élément de changement de vitesse (12) et de réducteur constant dans la deuxième position de changement de vitesse (B).

3. Dispositif selon la revendication 1 ou 2, **caractérisé en ce que** dans une troisième position de changement de vitesse ouverte du premier élément de changement de vitesse (12), le troisième élément de l'engrenage planétaire (8) peut pivoter librement.

4. Dispositif selon l'une quelconque des revendications 1 à 3, **caractérisé en ce qu'**en cas de deuxième élément de changement de vitesse (13) fermé, le premier élément de l'engrenage planétaire (8) est couplé fixement aux arbres d'entrée de boîte de vitesses (6, 7) des deux parties de boîte de vitesses (4, 5) et qu'en cas de deuxième élément de changement de vitesse (13) ouvert, le premier élément de l'engrenage planétaire (8) est exclusivement couplé fixement à l'arbre d'entrée de boîte de vitesses (6) de la première partie de boîte de vitesses (4).

5. Chaîne cinématique d'un véhicule hybride,
- avec un entraînement hybride comprenant un moteur à combustion interne (1) et une machine électrique (2) ;
- avec une boîte de vitesses (3) comprenant deux parties de boîte de vitesses (4, 5) connectées en parallèle et un arbre d'entrée de boîte de vitesses (6, 7) par partie de boîte de vitesses ;
- avec un engrenage planétaire (8) comportant les éléments suivants : étai (9), roue solaire (10) et roue creuse (11) ;
- avec premier élément de changement de vitesse (12) et un deuxième élément de changement de vitesse (13) ;
- le moteur à combustion interne (1) de l'entraînement hybride étant couplé ou pouvant être couplé à l'arbre d'entrée de boîte de vitesses (7) de la deuxième partie de boîte de vitesses (5) ;
- l'arbre d'entrée de boîte de vitesses (6) de la première partie de boîte de vitesses (4) et l'arbre d'entrée de boîte de vitesses (7) de la deuxième partie de boîte de vitesses (5) pouvant être couplés l'un avec l'autre et/ou être séparés l'un de l'autre par le biais du deuxième élément de changement de vitesse (13) ;
- un premier élément parmi les éléments (9, 10, 11) de l'engrenage planétaire (8) étant relié fixement à l'arbre d'entrée de boîte de vitesses (6) de la première partie de boîte de vitesses (4) ;
- un deuxième élément parmi les éléments (9, 10, 11) de l'engrenage planétaire (8) étant relié fixement à la machine électrique (2) de l'entraînement hybride ;
- **caractérisée en ce qu'**un troisième élément parmi les éléments (9, 10, 11) de l'engrenage planétaire (8) peut être couplé côté carter et/ou côté stator à l'arbre d'entrée de boîte de vitesses (7) de la deuxième partie de boîte de vitesses (5) dans une première position de changement de vitesse (A) du premier élément de changement de vitesse (12) et dans une deuxième position de changement de vitesse (B) du premier élément de changement de vitesse (12) par le biais du premier élément de changement de vitesse (12).

6. Chaîne cinématique selon la revendication 5, **caractérisée par** les caractéristiques selon l'une quelconque des revendications 2 à 4 ou plusieurs d'entre elles.

7. Chaîne cinématique selon la revendication 5 ou 6, **caractérisée en ce que** l'arbre d'entrée de boîte de vitesses (7) de la deuxième partie de boîte de vitesses (5) est couplé sans embrayage au moteur à combustion interne (1).

8. Chaîne cinématique selon la revendication 5 ou 6, **caractérisée en ce que** l'arbre d'entrée de boîte de vitesses (7) de la deuxième partie de boîte de vitesses (5) peut être couplé au moteur à combustion interne (1) via un embrayage de coupure (14).

9. Chaîne cinématique selon l'une quelconque des revendications 5 à 8, **caractérisée en ce que** le deuxième élément de changement de vitesse (13) est intégré dans un essieu de la boîte de vitesses (3).

10. Procédé pour faire fonctionner un dispositif selon l'une quelconque des revendications 1 à 4 et/ou une chaîne cinématique selon l'une quelconque des revendications 5 à 9, **caractérisé en ce que** lorsque le deuxième élément de changement de vitesse (13) est fermé et qu'un rapport est passé dans la première partie de boîte de vitesses (4) ou lorsque le deuxième élément de changement de vitesse (13) est ouvert et qu'un rapport est passé dans la deuxième partie de boîte de vitesses (5), la machine électrique (2) est d'abord libérée de préférence entièrement de toute charge pour commuter le premier élément de changement de vitesse (12) de la première position de changement de vitesse (A) dans la deuxième position de changement de vitesse (B) et sa charge est entièrement ou en partie transférée sur le moteur à combustion interne (1), à la suite de quoi la première position de changement de vitesse (A) est retirée sans charge puis le premier élément de changement de vitesse (12) est synchronisé via la machine électrique (2) par rapport à la deuxième position de changement de vitesse (B) puis la deuxième position de changement de vitesse (B) est passée sans charge, le moteur à combustion interne (1) mettant à disposition un certain couple au niveau d'un arbre de sortie de boîte de vitesses (15) de la boîte de vitesses (3), via la première partie de boîte de vitesses (4) lorsque le deuxième élément de changement de vitesse (13) est fermé et via la deuxième partie de boîte de vitesses (5) lorsque le deuxième élément de changement de vitesse (13) est ouvert.

11. Procédé pour faire fonctionner un dispositif selon l'une quelconque des revendications 1 à 4 et/ou une chaîne cinématique selon l'une quelconque des revendications 5 à 9, **caractérisé en ce que** lorsque le deuxième élément de changement de vitesse (13) est fermé et qu'un rapport est passé dans la première partie de boîte de vitesses (4) ou lorsque le deuxième élément de changement de vitesse (13) est ouvert et qu'un rapport est passé dans la deuxième partie de boîte de vitesses (5), la machine électrique (2) est d'abord libérée de préférence entièrement de toute charge pour commuter le premier élément de changement de vitesse (12) de la deuxième position de changement de vitesse (B) dans la première position de changement de vitesse (A) et sa charge est entièrement ou en partie transférée sur le moteur à combustion interne (1), à la suite de quoi la deuxième position de changement de vitesse (B) est retirée sans charge puis le premier élément de changement de vitesse (12) est synchronisé via la machine électrique (2) par rapport à la première position de changement de vitesse (A) puis la première position de changement de vitesse (A) est passée sans charge, le moteur à combustion interne (1) mettant à disposition un certain couple au niveau d'un arbre de sortie de boîte de vitesses (15) de la boîte de vitesses (3), via la première partie de boîte de vitesses (4) lorsque le deuxième élément de changement de vitesse (13) est fermé et via la deuxième partie de boîte de vitesses (5) lorsque le deuxième élément de changement de vitesse (13) est ouvert.

12. Procédé pour faire fonctionner un dispositif selon l'une quelconque des revendications 1 à 4 et/ou une chaîne cinématique selon l'une quelconque des revendications 5 à 9, **caractérisé en ce que** lorsque le deuxième élément de changement de vitesse (13) peut être entraîné sous la forme d'un élément de changement de vitesse actionnable par glissement et réalisé par complémentarité de frottements, pour commuter le premier élément de changement de vitesse (12) de la deuxième position de changement de vitesse (B) dans la première position de changement de vitesse (A) sans interruption de force de traction avec le deuxième élément de changement de vitesse (13) ouvert au départ, la machine électrique (2) est d'abord entièrement libérée de toute charge et sa charge est entièrement transférée sur le moteur à combustion interne (1) via le deuxième élément de changement de vitesse (13) au moins en partie fermé à cette fin et actionnable par glissement, à la suite de quoi la deuxième position de changement de vitesse (B) est passée sans charge, puis le premier élément de changement de vitesse (12) est synchronisé via la machine électrique (2) par rapport à la première position de changement de vitesse (A), à la suite de quoi la première position de changement de vitesse (A) est passée sans charge, à la suite de quoi une mise en charge se produit au niveau de la machine électrique (2) et un retrait de charge se produit au niveau du moteur à combustion interne (1), de sorte que le deuxième élément de changement de vitesse (13) est de préférence sans charge avant d'être ouvert.

13. Procédé pour faire fonctionner un dispositif selon l'une quelconque des revendications 1 à 4 et/ou une chaîne cinématique selon l'une quelconque des revendications 5 à 9, **caractérisé en ce que** lorsque le deuxième élément de changement de vitesse (13) est réalisé sous la forme d'un élément de changement de vitesse actionnable par glissement, réalisé par complémentarité de frottements, pour commuter le premier élément de changement de vitesse (12) de la première position de changement de vitesse (A) dans la deuxième position de changement de vitesse (B) sans interruption de force de traction avec le deuxième élément de changement de vitesse (13) ouvert au début, la machine électrique (2) est d'abord entièrement libérée de toute charge et sa charge est entièrement transférée sur le moteur à combustion interne (1) via le deuxième élément de changement de vitesse (13) au moins en partie fermé à cette fin et actionnable par glissement, à la suite de quoi la première position de changement de vitesse (A) est passée sans charge, puis le premier élément de changement de vitesse (12) est synchronisé via la machine électrique (2) par rapport à la deuxième position de changement de vitesse (B), puis la deuxième position de changement de vitesse (B) est passée sans charge, à la suite de quoi une mise en charge se produit au niveau de la machine électrique (2) et un retrait de charge se produit au niveau du moteur à combustion interne (1), de sorte que le deuxième élément de changement de vitesse (13) est de préférence sans charge avant d'être ouvert.

14. Procédé pour faire fonctionner un dispositif selon l'une quelconque des revendications 1 à 4 et/ou une chaîne cinématique selon l'une quelconque des revendications 5 à 9, **caractérisé en ce que** lorsque l'arbre d'entrée de boîte de vitesses (7) de la deuxième partie de boîte de vitesses (5) est couplé au moteur à combustion interne (1) via un embrayage de coupure (14) actionnable par glissement et réalisé par complémentarité de frottements, pour commuter le premier élément de changement de vitesse (12) de la première position de changement de vitesse (A) dans la deuxième position de changement de vitesse (B) avec l'embrayage de coupure (14) entièrement fermé au départ, avec le deuxième élément de changement de vitesse (13) ouvert au début, avec le rapport passé au départ dans la première partie de boîte de vitesses (4) et avec la deuxième partie de boîte de vitesses (5) se trouvant au départ au neutre, l'embrayage de coupure (14) est d'abord entraîné par glissement et la vitesse de rotation de l'arbre d'entrée de boîte de vitesses (7) de la deuxième partie de boîte de vitesses (5) approchée de la vitesse de rotation de l'arbre d'entrée de boîte de vitesses (6) de la première partie de boîte de vitesses (4), à la suite de quoi le deuxième élément de changement de vitesse (13) est fermé ou un rapport est passé dans la deuxième partie de boîte de vitesses (5), à la suite de quoi la charge est retirée de la machine électrique (2), à la suite de quoi la première position de changement de vitesse (A) est retirée, puis le premier élément de changement de vitesse (12) est synchronisé via la machine électrique (2) par rapport à la deuxième position de changement de vitesse (B), puis la deuxième position de changement de vitesse (B) est passée.

15. Procédé pour faire fonctionner un dispositif selon l'une quelconque des revendications 1 à 4 et/ou une chaîne cinématique selon l'une quelconque des revendications 5 à 9, **caractérisé en ce que** lorsque l'arbre d'entrée de boîte de vitesses (7) de la deuxième partie de boîte de vitesses (5) est couplé au moteur à combustion interne (1) via un embrayage de coupure (14) actionnable par glissement et réalisé par complémentarité de frottements, pour commuter le premier élément de changement de vitesse (12) de la deuxième position de changement de vitesse (B) dans la première position de changement de vitesse (A) avec le deuxième élément de changement de vitesse (13) ouvert au début, avec le rapport passé au départ dans la première partie de boîte de vitesses (4) et avec la deuxième partie de boîte de vitesses (5) se trouvant au départ au neutre, l'embrayage de coupure (14) est d'abord ouvert ou maintenu ouvert, puis le deuxième élément de changement de vitesse (13) est fermé ou un rapport est passé dans la deuxième partie de boîte de vitesses (5), à la suite de quoi avec l'embrayage de coupure (14) entraîné par glissement, une mise en charge est réalisée au niveau du moteur à combustion interne (1) et un retrait de charge est réalisé au niveau de la machine électrique (2), à la suite de quoi la deuxième position de changement de vitesse (B) est retirée, puis le premier élément de changement de vitesse (12) est synchronisé via la machine électrique (2) par rapport à la première position de changement de vitesse (A), à la suite de quoi la première position de changement de vitesse (A) est passée.
